# EUROPEAN PATENT APPLICATION

(11) **EP 0 925 895 A1**
(43) Date of publication of application: **30.06.1999**
(21) Application number: 98124452.8
(22) Date of filing: 23.12.1998
(51) Int. Cl.: B29C 33/56, B29C 44/58

(54) **Process for the formation of automobile interior equipment**

(30) Priority: 25.12.1997 JP 35709797
(71) Applicant: Japan Polychem Corporation, Tokyo-To (JP)
(72) Inventor: Masubuchi, Naganori, 1, Toho-cho; Yokkaichi-shi, Mie (JP); Ito, Roichi, 1, Toho-cho; Yokkaichi-shi, Mie (JP)
(74) Representative: VOSSIUS & PARTNER

(57) **Abstract**

Disclosed is a process for the formation of an automobile interior equipment, which comprises fully shooting a mold having the inner wall thereof coated with a heat insulating resin layer on the cavity side thereof with a polyolefin resin composition containing a foaming agent, and then forcing the mold to be opened so that the expansion coefficient reaches not less than 1.4.

## Description

The present invention relates to a process for the formation of an automobile interior equipment having a light weight and a good external product appearance which can reduce the raw material cost.

As the material to be used as the skin of automobile interior equipments such as instrument panel and door trim there has heretofore been used a material mainly composed of polyvinyl chloride. In order to meet environmental needs such as weight reduction, recyclability and combustibility of automobile parts, however, polyolefinic thermoplastic resin materials have recently been put into practical use.

However, polyolefin resins, particularly polyolefin resin compositions comprising compounding ingredients such as inorganic filler and rubber component incorporated therein, are disadvantageous in that when injection-molded, the resulting product has deteriorated external appearance such as poor surface gloss, deteriorated surface smoothness and flow mark.

As an approach for improving the gloss and external appearance (surface smoothness, flow mark, etc.) of the formed products thus obtained there has been known a method involving the surface finish of a mold to a higher precision. However, the improvement in the gloss and external appearance of the formed products by this high precision surface finish is limited.

As other approaches for improving the surface gloss and external appearance of the formed products there have been known a method involving the predetermination of the temperature of the resin to be injection-molded to a higher value and a method involving the predetermination of the temperature of the injection mold to a higher value.

However, the method involving the predetermination of the temperature of the resin to be injection-molded to a higher value is disadvantageous in that a drastic improvement of the surface gloss and external appearance cannot be expected. On the other hand, the method involving the predetermination of the temperature of the injection mold to a higher value is disadvantageous in that it adds to the time required for cooling of the mold to that extent, resulting in the reduction of productivity on an industrial basis to disadvantage.

In order to attain the reduction of the weight of products, a method has been practiced involving the reduction of the thickness of products and the enhancement of the rigidity of products. However, further weight reduction is difficult. Further, as the performance of materials has been improved, the material cost has been increased, making it difficult to further reduce the production cost.

It is therefore an object of the present invention to provide a process for the formation of an automobile interior equipment having a light weight, a high surface gloss and a good external appearance at a low cost without any remarkable drop of industrial productivity.

This object has been achieved by the surprising finding that the formation of a specific raw material in a specific mold using a specific forming method makes it possible to form an automobile interior equipment having a light weight, a high surface gloss and a good external appearance at a low cost without any remarkable drop of industrial productivity.

The process for the formation of an automobile interior equipment according to the present invention comprises fully shooting a mold having the inner wall thereof coated with a heat insulating resin layer on the cavity side thereof with a polyolefin resin composition containing a foaming agent, and then forcing the mold to be opened so that the expansion coefficient reaches not less than 1.4.

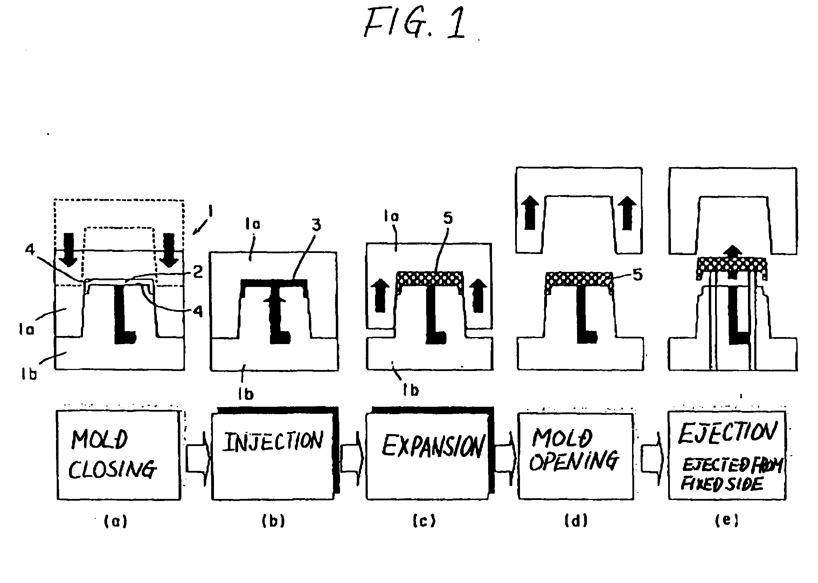

Fig. 1 is a flow chart illustrating the process for the injection expansion molding according to the example of the present invention, wherein (a) is a schematic diagram illustrating a closed mold, (b) is a schematic diagram illustrating how a raw material resin is injected into the mold, (c) is a schematic diagram illustrating the mold which has been forced to be opened, (d) is a schematic diagram illustrating the mold which has thus been opened, and (e) is a schematic diagram illustrating how the foamed product is withdrawn from the mold.

### [I] Raw materials

### (1) Polyolefin resin composition

### (A) Constituents

### (a) Polyolefin resin

The polyolefin resin to be used as a raw material in the process for the formation of an automobile interior equipment according to the present invention is not specifically limited so far as it is an ordinary polyolefin resin to be used for formed product for automobile interior equipments. Examples of the polyolefin resin employable herein include ethylene resins such as ethylene homopolymer and ethylene-α-olefin copolymer, propylene polymers such as propylene homopolymer and random or block copolymer of propylene with other α-olefins, and other α-olefin resins such as polybutene-1, poly-4-methylbutene-1, poly-3-methylbutene-1 and poly-4-methylpentene. Further examples of the polyolefin resin include products of copolymerization of ethylene or propylene with unsaturated carboxylic acids such as acrylic acid, methyl methacrylate, ethyl acrylate and maleic anhydride, derivatives thereof, unsaturated aromatic monomers (styrene, α-methylstyrene, etc.), vinyl esters (vinyl acetate, vinyl butyrate, etc.), vinyl silanes, etc., and saponification products and tonic ionization products thereof. A blend of a plurality of these polyolefin resins may be used.

Preferred among these polyolefin resins are ethylene resins such as ethylene homopolymer and ethylene-propylene copolymer, and propylene resins such as propylene homopolymer, propylene-ethylene random copolymer, propylene-ethylene block copolymer and propylene-ethylene-butene copolymer. The ethylene content in the ethylene-propylene copolymer mainly composed of ethylene is from about 60 to 95% by weight. The ethylene content in the propylene-ethylene random copolymer mainly composed of propylene is from about 0.5 to 20% by weight.

Specific examples of the polyolefin resin employable herein include high density polyethylene, middle density polyethylene, low density polyethylene, low density linear polyethylene, low density branched polyethylene, ethylene-propylene copolymer, propylene homopolymer, propylene-ethylene random copolymer, propylene-ethylene block copolymer, and propylene-ethylene-butene copolymer.

Preferred among these specific examples are propylene resins such as propylene homopolymer, propylene-ethylene block copolymer and propylene-ethylene random copolymer. Particularly preferred among these examples is propylene-ethylene block copolymer.

The melt flow rate (MFR) of the polyolefin resin to be used in the present invention is from about 10 to 200 g/10 min., preferably from about 30 to 150 g/10 min.

The polyolefin resin composition containing a foaming agent to be used as a raw material in the process for the formation of an automobile interior equipment according to the present invention maybe a polyolefin resin comprising an inorganic filler or rubber component described later incorporated therein.

### (b) Foaming agent

As the foaming agent to be incorporated in the foregoing polyolefin resin there may be used either a chemical foaming agent or a physical foaming agent. In practice, however, a chemical foaming agent is preferably used.

Examples of the foregoing chemical foaming agent employable herein include azodicarbonamide, azobisisobutylonitrile, diazoaminobenzene, N, N'-dinitrosopentamethylenetetramine, N, N'-dimethyl-N, N'-dinitroterephthalamide, benzenesulfonyl hydrazide, p-toluenestyrenesulfonyl hydrazide, p, p'-oxybisbenzenesulfonyl hydrazide, sodium bicarbonate, and sodium citrate.

Examples of the foregoing physical foaming agent employable herein include propane, butane, pentane, dichlorodifluoromethane, dichloromonofluoromethane, and trichloromonofluoromethane.

These foaming agents may be used in combination with a foaming aid, a crosslinking agent, a nucleating agent, etc.

### (c) Other compounding ingredients

### Inorganic filler

Preferred examples of inorganic fillers to be incorporated in the foregoing polyolefin resin include calcium oxide, magnesium oxide, silica, titanium oxide, aluminum hydroxide, magnesium hydroxide, calcium hydroxide, basic magnesium silicate, calcium carbonate, barium sulfate, talc, clay, mica, zeolite, whiskers such as fibrous potassium titanate, fibrous magnesium oxasulfate and fibrous aluminum borate, carbon fiber, and glass fiber.

Preferred among these inorganic fillers is talc.

### Rubber component

Preferred examples of rubber components to be incorporated in the foregoing polyolefin resin include polyolefin rubbers such as ethylene-propylene copolymer rubber (EPM), ethylene-1-butene copolymer rubber, ethylene-propylene-1-butene copolymer rubber, ethylene-propylene-non-conjugated diene copolymer rubber (EPDM), ethylene-1-butene-non-conjugated copolymer rubber and ethylene-propylene-1-butene-non-conjugated diene copolymer rubber, and styrene rubbers such as styrene-butadiene copolymer.

Preferred among these rubber components are polyolefin rubbers such as ethylene-propylene copolymer rubber (EPM) and ethylene-propylene-non-conjugated diene copolymer rubber (EPDM).

These rubber components exhibit a Mooney viscosity (ML₁₊₄) of normally from 10 to 200, preferably from 30 to 150, at 100°C.

### (B) Mixing proportion

The foregoing polyolefin resin composition comprises the foregoing foaming agent and optionally the foregoing inorganic filler and rubber component incorporated therein in an amount of from 0.1 to 10 parts by weight, from 0 to 20 parts by weight and from 0 to 30 parts by weight, preferably from 0.5 to 5 parts by weight, from 0 to 10 parts by weight and from 0 to 25 parts by weight, respectively, based on 100 parts by weight of the foregoing polyolefin resin component.

If the mixing proportion of the foregoing foaming agent falls below the above defined range, the resulting expansion coefficient is reduced. On the contrary, if the mixing proportion of the foregoing foaming agent exceeds the above defined range, the resulting product exhibits a deteriorated external surface appearance and thus is practically unacceptable.

### (C) Kneading

The polyolefin resin composition to be used in the present invention may be produced by a process which comprises blending the foregoing compounding ingredients except for the foaming agent, and then melt-kneading the blend at a predetermined temperature of from 180°C to 250°C, preferably from 180°C to 220°C, using a kneader such as extruder, Banbury mixer, roll, Brabender Plastograph and kneader Brabender. Among these kneaders, extruder, particularly twin-screw extruder, is preferred. The foaming agent is preferably added to the blend as a master batch during injection expansion molding.

### [II] Forming

The process for the formation of an automobile interior equipment according to the present invention is characterized in its forming process and the structure of the mold used.

### (1) Injection mold

### (a) Mold

As shown in Fig. 1 ((a) to (e)), the mold to be used in the process of the present invention comprises at least a top force 1a and a bottom force 1b so that it can be opened after injection molding. The mold is arranged such that when the two forces are combined, a cavity 2 is formed. The cavity 2 is fully shot with the foregoing polyolefin resin composition 3 containing a foaming agent by injecting the polyolefin resin composition into the cavity so as to occupy not less than 95% of the cavity volume. If the cavity 2 is not fully shot with the polyolefin resin composition 3, sufficient expansion coefficient and external surface appearance cannot be obtained.

A thin metal layer may be provided on the mold 1 for used in the method of present invention (on the cavity side of the heat insulating resin layer 4), if necessary, for example, in order to improve durability of the mold or to provide emboss.

The examples of the materials for forming the thin metal layer include nickel, nickel alloy, iron, iron alloy, copper and copper alloy.

The thin metal layer preferably has a thickness of 5 to 2,000 µm.

The examples of the methods for providing the thin metal layer on the heat insulating layer surface include electrocasting, machine work and plating.

The top force 1a and the bottom force 1b are normally formed by a metal such as alloy mainly composed of steel or iron, aluminum alloy and zinc alloy as a main material.

### (b) Heat insulating resin layer

The mold 1 to be used in the process of the present invention comprises a heat insulating resin layer 4 formed on the inner wall of the cavity 2 formed between the top force 1a and the bottom force 1b which are combined. In particular, the heat insulating resin layer 4 is preferably formed on the inner wall of the top force 1a with which the surface of the product comes in contact.

### Thermal conductivity

The thermal conductivity of the heat insulating resin layer 4 formed on the inner wall of the top force 1a and the bottom force 1b is from 1 x 10⁻⁴ to 3 x 10⁻³ cal/cm·sec·°C, preferably from 1 x 10⁻⁴ to 5 x 10⁻⁴ cal/cm·sec·°C.

If the thermal conductivity of the heat insulating resin layer 4 falls outside the above defined range, there is a tendency toward difficulty in attaining the desired high gloss and good external appearance.

### Melting point and softening point

The heat insulating resin layer 4 is formed by a resin having a melting point or softening point of not lower than 150°C, preferably from 150°C to 260°C.

Specific examples of the foregoing heat insulating resin 4 employable herein include polyethylene terephthalate, polytetrafluoroethylene, polycarbonate, nylon, and epoxy resin.

If the melting point of the foregoing heat insulating resin 4 falls below the above defined range, there is a tendency toward difficulty in attaining the desired high gloss and good external appearance.

### Thickness

The thickness of the foregoing heat insulating resin layer 4 is normally from 5 to 1,000 µm, preferably from 50 to 500 µm.

The foregoing heat insulating layer 4 may be formed by flame-spraying a heat insulating resin onto the inner surface of the mold 1 or sticking a film of the heat insulating resin to the inner surface of the mold 1.

### (2) Injection expansion molding

### (a) Injection

The molding can be accomplished by a process which comprises closing the mold 1 as shown in (a) in Fig. 1, and then injecting the foregoing polyolefin resin composition 3 containing a foaming agent as a raw material into the cavity 2 in the mold 1 until the cavity 2 is fully shot with the polyolefin resin composition 3 as shown in (b) of Fig. 1.

The injection is normally effected at a temperature of from 180°C to 250°C, an injection pressure of from 300 to 1,300 kg/cm² and a mold temperature of from 20°C to 60°C.

### (b) Expansion

The upper force 1a of the mold 1 in the cavity 2 of which the polyolefin resin composition 3 containing a foaming agent has been packed is forced to be lifted up to accelerate the expansion of the polyolefin resin composition 3 containing a foaming agent as shown in (c) of Fig. 1.

In this manner, the expansion of the polyolefin resin composition 3 containing a foaming agent can be accelerated to obtain a foamed product 5.

### [III] Foamed product

Since the process for the formation of an automobile interior equipment of the present invention employs the mold 1 having a heat insulating resin layer 4 formed on the inner surface thereof, the solidification of the surface of the molten resin is momentarily delayed, making it possible to dissolve the gas thus caught into the interior of the resin and hence avoid the occurrence of so-called swirl mark on the surface of the resin. Accordingly, a foamed product 5 having an excellent external surface appearance.

The expansion coefficient of the foamed product 5 is not less than 1.4, preferably from 1.5 to 3.0. If the expansion coefficient of the foamed product 5 falls below the above defined range, the weight reduction and the rigidity of the resulting foamed product cannot be well balanced.

The percent content of closed fine cells 5 having a short axis length of from 10 to 200 µm, preferably from 10 to 200 µm, and a long axis length of from 30 to 500 µm, preferably from 30 to 300 µm, in the foamed product 5 is not less than 20%, preferably from 65 to 100%.

The injection-molded product thus obtained can be used for various purposes.

Specific examples of these purposes include automobile interior equipments such as door trim, instrument panel, lever, knob and inner lining.

### EXAMPLES

The process for the injection expansion molding of a polyolefin resin of the present invention will be further illustrated with reference to experimental examples.

### [I] Evaluation method

For the evaluation of the physical properties of products of examples and comparative examples, the following methods were used.

### (1) External surface appearance: Visually determined

The criterion for evaluation is as follows:
- ○:: Good
- X:: Poor

### [II] Experimental example

### EXAMPLE 1

Using a 500-ton composite compression molding machine produced by Kobe Steel, Ltd. equipped with a door trim mold (cavity: 2.5 mm) having a coating layer of a polyethylene terephthalate resin (PET) with a thickness of 500 µm, a thermal conductivity of 3 x 10⁻⁴ cal/cm·sec·°C, a melting point of not lower than 254°C and a surface loss of 95% formed on the surface of the cavity thereof, a polyolefin resin composition comprising a blend of 100 parts by weight of a propylene-ethylene block copolymer resin (MFR: 80 g/10 min.) of high impact high fluidity grade produced by Nippon Polychem Co., Ltd. and 3 parts by weight of a Type S20N foaming agent produced by Mitsubishi Chemical Corporation was subjected to full shot at a resin temperature of 230°C, an injection pressure of 500 kg/cm² and a mold temperature of 50°C. The mold was then forced to be expanded to obtain a foamed product having a size of 120 mm x 120 mm x 4 mmt.

The results are set forth in Table 1 below.

### EXAMPLES 2, COMPARATIVE EXAMPLES 1 - 2

The experimental procedure of Example 1 was followed except that the forming method set forth in Table 1 was conducted.

The results are set forth in Table 1 below.

In the short shot process of comparative Example 1, the percent packing was 80% of that of the full shot process.

**Table 1**

| | | Example Nos. | | Comparative Example Nos. | |
|---|---|---|---|---|---|
| | | 1 | 2 | 1 | 2 |
| Raw material | Polypropylene resin MFR (g/10 min.) | 80 | 50 | 80 | 80 |
| | Foaming agent | S20N | S20N | S20N | S20N |
| Forming | Forming method | Mold expansion | Mold expansion | Short shot | Mold expansion |
| | Heat insulating resin layer on mold | PET resin | PET resin | PET resin | None |
| Evaluation | External appearance of product | ○ | ○ | ○ | X |
| | | | | | Swirl mark occurs |
| | Expansion coefficient | 1.7 | 1.6 | 1.2 | 1.7 |

### Effect of the Invention:

In accordance with the process for the injection molding of a polyolefin resin of the present invention, an automobile interior equipment having a light weight, a high surface gloss and a good external appearance can be invariably formed at a low cost without any remarkable drop of industrial productivity.

## Claims

1. A process for the formation of an automobile interior equipment, which comprises:
fully shooting a mold with a polyolefin resin composition containing a foaming agent, wherein a heat insulating resin layer is coated on an inner wall of the mold on the cavity side thereof; and
forcing the mold to be opened so that the expansion coefficient reaches not less than 1.4.

2. The process for the formation of an automobile interior equipment, wherein the heat insulating resin layer and a thin metal layer are coated on the inner wall of the mold on the cavity side thereof in this order.

3. The process for the formation of an automobile interior equipment according to Claim 1 or 2, wherein the automobile interior equipment is a door trim.

4. The process for the formation of an automobile interior equipment according to any one of Claims 1 to 3, wherein the polyolefin resin is a propylene resin.

5. The process for the formation of an automobile interior equipment according to any one of Claims 1 to 4,wherein the heat insulating resin layer to be coated on the inner wall of the mold on the cavity side thereof is formed by a resin selected from the group consisting of polyethylene terephthalate, polytetrafluoroethylene, polycarbonate, nylon and epoxy resin.

6. The process for the formation of an automobile interior equipment according to any one of Claims 1 to 5, wherein the heat insulating layer has a thermal conductivity of 1 x 10⁻⁴ to 3 x 10⁻³ cal/cm·sec·°C.

7. The process for the formation of an automobile interior equipment according to any one of Claims 1 to 6, wherein the heat insulating layer has a thickness of 5 to 1,000 µm.

8. Automobile interior equipment obtainable by the process according to any of claims 1 to 7.
